# EUROPEAN PATENT APPLICATION

(11) **EP 3 031 878 A1**
(43) Date of publication of application: **15.06.2016**
(21) Application number: 14196728.1
(22) Date of filing: 08.12.2014
(51) Int. Cl.: C09K 8/584

(54) **Internal olefin sulfonate composition and use thereof in enhanced oil recovery**

(71) Applicant: Shell Internationale Research Maatschappij B.V., 2596 HR Den Haag (NL)
(72) Inventor: Mul, Pim, 1031 HW Amsterdam (NL); Rommens, Hidde Cornelis Willem, 1031 HW Amsterdam (NL)
(74) Representative: Matthezing, Robert Maarten

(57) **Abstract**

The invention relates to an internal olefin sulfonate composition, which composition comprises a monosubstituted internal olefin sulfonate substituted by one sulfonate group and optionally a disubstituted internal olefin sulfonate substituted by two sulfonate groups, wherein if the composition comprises said disubstituted internal olefin sulfonate the molar ratio of the monosubstituted internal olefin sulfonate to the disubstituted internal olefin sulfonate is equal to or higher than 70:1 and is preferably in the range of from 70:1 to 10,000:1. Further, the invention relates to a process for treatment of an internal olefin sulfonate composition, wherein the internal olefin sulfonate composition as described above is obtained. Still further, the invention relates to a method of treating a hydrocarbon containing formation, wherein the internal olefin sulfonate composition as described above is used.

## Description

### Field of the invention

The present invention relates to an internal olefin sulfonate composition, to a process for treatment of an internal olefin sulfonate composition, and to a method of treating a hydrocarbon containing formation using an internal olefin sulfonate composition as surfactant.

### Background of the invention

Hydrocarbons, such as oil, may be recovered from hydrocarbon containing formations (or reservoirs) by penetrating the formation with one or more wells, which may allow the hydrocarbons to flow to the surface. A hydrocarbon containing formation may have one or more natural components that may aid in mobilising hydrocarbons to the surface of the wells. For example, gas may be present in the formation at sufficient levels to exert pressure on the hydrocarbons to mobilise them to the surface of the production wells. These are examples of so-called "primary oil recovery".

However, reservoir conditions (for example permeability, hydrocarbon concentration, porosity, temperature, pressure, composition of the rock) can significantly impact the economic viability of hydrocarbon production from any particular hydrocarbon containing formation. Furthermore, the above-mentioned natural pressure-providing components may become depleted over time, often long before the majority of hydrocarbons have been extracted from the reservoir. Therefore, supplemental recovery processes may be required and used to continue the recovery of hydrocarbons, such as oil, from the hydrocarbon containing formation. Such supplemental oil recovery is often called "secondary oil recovery" or "tertiary oil recovery". Examples of known supplemental processes include waterflooding, polymer flooding, gas flooding, alkali flooding, thermal processes, solution flooding, solvent flooding, or combinations thereof.

In recent years there has been increased activity in developing new methods of chemical Enhanced Oil Recovery (cEOR) for maximising the yield of hydrocarbons from a subterranean reservoir. In surfactant cEOR, the mobilisation of residual oil is achieved through surfactants which generate a sufficiently low crude oil / water interfacial tension (IFT) to give a capillary number large enough to overcome capillary forces and allow the oil to flow (Lake, Larry W., "Enhanced oil recovery", PRENTICE HALL, Upper Saddle River, New Jersey, 1989, ISBN 0-13-281601-6).

However, different reservoirs can have different characteristics (for example composition of the rock, crude oil type, temperature, water composition - salinity, hardness etc.), and therefore, it is desirable that the structures and properties of the added surfactant(s) be matched to the particular conditions of a reservoir to achieve the required low IFT. In addition, other important criteria may have to be fulfilled, such as low rock retention or adsorption, compatibility with polymer, thermal and hydrolytic stability and acceptable cost (including ease of commercial scale manufacture).

Compositions and methods for cEOR utilising an internal olefin sulfonate (IOS) as surfactant are described in US4597879, US4979564, US5068043 and "Field Test of Cosurfactant-enhanced Alkaline Flooding", Falls et al., Society of Petroleum Engineers Reservoir Engineering, 1994.

In the present invention, it is desired to provide compositions and methods for cEOR utilising internal olefin sulfonates as surfactant. More in particular, to provide internal olefin sulfonates which have an altered cEOR performance, for example in terms of reducing the interfacial tension (IFT), as already described above. Further cEOR performance parameters of potential relevance are optimal salinity and aqueous solubility at such optimal salinity. By "optimal salinity", reference is made to the salinity of the brine present in a mixture comprising said brine (a salt-containing aqueous solution), the hydrocarbons (e.g. oil) and the surfactant(s), at which salinity said IFT is lowest. The salinity of the brine as present in oil-containing reservoirs may vary broadly, but in many reservoirs the brine salinity is between 1 and 5 wt.% of NaCl or between 1 and 10 wt.% of NaCl. Therefore, it is generally preferred that the optimal salinity of a surfactant composition likewise is between 1 and 10 wt.% of NaCl. In addition, it is preferred that at or close to such optimal salinity, the aqueous solubility of the surfactant is sufficient to good. Thus, in the present invention, it is desired to alter one or more of these cEOR performance parameters for internal olefin sulfonates.

### Summary of the invention

It was found that an internal olefin sulfonate composition having such altered cEOR performance parameter(s), including an altered optimal salinity, is a composition which comprises a monosubstituted internal olefin sulfonate substituted by one sulfonate group and optionally a disubstituted internal olefin sulfonate substituted by two sulfonate groups, wherein if the composition comprises said disubstituted internal olefin sulfonate the molar ratio of the monosubstituted internal olefin sulfonate to the disubstituted internal olefin sulfonate is equal to or higher than 70:1 and is preferably in the range of from 70:1 to 10,000:1.

Accordingly, the present invention relates to an internal olefin sulfonate composition as described above.

Further, the present invention relates to a process for treatment of an internal olefin sulfonate composition, which composition comprises a monosubstituted internal olefin sulfonate substituted by one sulfonate group and a disubstituted internal olefin sulfonate substituted by two sulfonate groups, in which process substantially all of the disubstituted internal olefin sulfonate is removed or the disubstituted internal olefin sulfonate is removed to such extent that the molar ratio of the monosubstituted internal olefin sulfonate to the disubstituted internal olefin sulfonate is increased to a value which is equal to or higher than 70:1 and is preferably in the range of from 70:1 to 10,000:1.

Still further, the present invention relates to a method of treating a hydrocarbon containing formation, comprising the following steps:
a) providing the composition as described above or the composition as obtained by the process as described above to at least a portion of the hydrocarbon containing formation; and
b) allowing the internal olefin sulfonate from the composition to interact with the hydrocarbons in the hydrocarbon containing formation.

### Brief description of the drawings

Figure 1A illustrates the reactions of an internal olefin with sulfur trioxide (sulfonating agent) during a sulfonation process.
Figure 1B illustrates the subsequent neutralization and hydrolysis process to form an internal olefin sulfonate.
Figure 2 relates to an embodiment for application in cEOR.
Figure 3 relates to another embodiment for application in cEOR.

### Detailed description of the invention

In one aspect, the present invention relates to an internal olefin sulfonate composition, which composition comprises a monosubstituted internal olefin sulfonate substituted by one sulfonate group and optionally a disubstituted internal olefin sulfonate substituted by two sulfonate groups, wherein if the composition comprises said disubstituted internal olefin sulfonate the molar ratio of the monosubstituted internal olefin sulfonate to the disubstituted internal olefin sulfonate is equal to or higher than 70:1 and is preferably in the range of from 70:1 to 10,000:1.

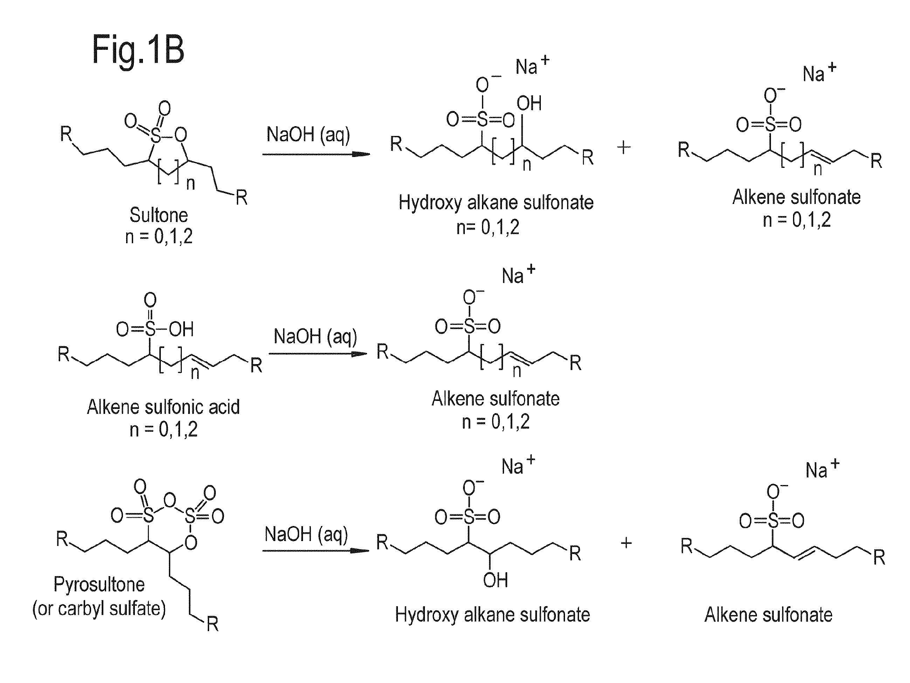

The composition of the present invention is an internal olefin sulfonate composition which comprises internal olefin sulfonate molecules. An internal olefin sulfonate molecule is an alkene or hydroxyalkane substituted by one or more sulfonate groups. An internal olefin sulfonate molecule may be substituted by one or more hydroxy groups. Examples of such internal olefin sulfonate molecules are shown in Figure 1B, which shows hydroxy alkane sulfonates (HAS) and alkene sulfonates (OS). Where in the present specification, reference is made to "monosubstituted internal olefin sulfonate" an internal olefin sulfonate substituted by one sulfonate group is meant. Likewise, where in the present specification, reference is made to "disubstituted internal olefin sulfonate" an internal olefin sulfonate substituted by two sulfonate groups is meant. In addition, as mentioned above, such "monosubstituted internal olefin sulfonate" and "disubstituted internal olefin sulfonate" may also be substituted by one or more hydroxy groups.

In the present invention, said internal olefin sulfonate composition comprises a monosubstituted internal olefin sulfonate substituted by one sulfonate group and optionally a disubstituted internal olefin sulfonate substituted by two sulfonate groups. This means that the composition of the present invention either comprises both said monosubstituted internal olefin sulfonate and said disubstituted internal olefin sulfonate or comprises said monosubstituted internal olefin sulfonate and substantially no disubstituted internal olefin sulfonate. Within the present specification, "substantially no" means that no detectible amount of the component in question is present in the composition.

Further, in the present invention, it is required in a case where the composition of the present invention comprises both said monosubstituted internal olefin sulfonate and said disubstituted internal olefin sulfonate, that the molar ratio of the monosubstituted internal olefin sulfonate to the disubstituted internal olefin sulfonate in said composition is equal to or higher than 70:1 and is preferably in the range of from 70:1 to 10,000:1.

It has appeared that the substantial absence of said disubstituted internal olefin sulfonate in the composition of the present invention or the presence of said disubstituted internal olefin sulfonate therein to such extent that the molar ratio of the monosubstituted internal olefin sulfonate to the disubstituted internal olefin sulfonate is equal to or higher than 70:1 and is preferably in the range of from 70:1 to 10,000:1, results in altered performance properties, especially in a case where the composition of the present invention is to be used in enhanced oil recovery (cEOR). More in particular, it was found that by using the composition of the present invention which comprises substantially no disubstituted internal olefin sulfonate or a reduced amount of said disubstituted internal olefin sulfonate, altered cEOR performance parameters were obtained, including an altered optimal salinity.

In the above-mentioned case where the composition of the present invention comprises both said monosubstituted internal olefin sulfonate and said disubstituted internal olefin sulfonate, said molar ratio of the monosubstituted internal olefin sulfonate to the disubstituted internal olefin sulfonate is at least 70:1, preferably at least 80:1, more preferably at least 90:1, more preferably at least 100:1, more preferably at least 120:1, more preferably at least 140:1, more preferably at least 160:1, more preferably at least 180:1, more preferably at least 200:1, more preferably at least 250:1, more preferably at least 300:1, more preferably at least 350:1, more preferably at least 400:1, more preferably at least 450:1, more preferably at least 500:1, more preferably at least 600:1, more preferably at least 700:1, more preferably at least 800:1, more preferably at least 900:1, more preferably at least 1,000:1, most preferably at least 1,200:1.

Further, in the above-mentioned case where the composition of the present invention comprises both said monosubstituted internal olefin sulfonate and said disubstituted internal olefin sulfonate, said molar ratio of the monosubstituted internal olefin sulfonate to the disubstituted internal olefin sulfonate is preferably at most 10,000:1, more preferably at most 7,000:1, more preferably at most 5,000:1, more preferably at most 3,000:1, more preferably at most 2,000:1 more preferably at most 1,000:1, more preferably at most 800:1, more preferably at most 700:1, more preferably at most 600:1, more preferably at most 500:1, more preferably at most 400:1, more preferably at most 350:1, most preferably at most 300:1.

Thus, in the above-mentioned case where the composition of the present invention comprises both said monosubstituted internal olefin sulfonate and said disubstituted internal olefin sulfonate, said molar ratio of the monosubstituted internal olefin sulfonate to the disubstituted internal olefin sulfonate may for example be of from 70:1 to 10,000:1, or 90:1 to 7,000:1, or 120:1 to 5,000:1, or 160:1 to 3,000:1, or 180:1 to 2,000:1.

Said molar ratio of the monosubstituted internal olefin sulfonate to the disubstituted internal olefin sulfonate may be determined by any method known to the skilled person. An example of such method is liquid chromatography-mass spectrometry (LC-MS). An alternative method is capillary electrophoresis with indirect UV detection, as for example described in "Indirect detection in capillary electrophoresis - Comparison between indirect UV and indirect laser-induced fluorescense detection for the determination of isoprenyl pyrophosphates", by P.E. Andersson et al., Journal of Chromatography A, 699, pages 323-330, 1995.

Thus, the composition of the present invention comprises an internal olefin sulfonate. Said internal olefin sulfonate (IOS) is prepared from an internal olefin by sulfonation. Within the present specification, an internal olefin and an IOS comprise a mixture of internal olefin molecules and a mixture of IOS molecules, respectively. That is to say, within the present specification, "internal olefin" as such refers to a mixture of internal olefin molecules whereas "internal olefin molecule" refers to one of the components from such internal olefin. Analogously, within the present specification, "IOS" or "internal olefin sulfonate" as such refers to a mixture of IOS molecules whereas "IOS molecule" or "internal olefin sulfonate molecule" refers to one of the components from such IOS. Said molecules differ from each other for example in terms of carbon number and/or branching degree.

Branched IOS molecules are IOS molecules derived from internal olefin molecules which comprise one or more branches. Linear IOS molecules are IOS molecules derived from internal olefin molecules which are linear, that is to say which comprise no branches (unbranched internal olefin molecules). An internal olefin may be a mixture of linear internal olefin molecules and branched internal olefin molecules. Analogously, an IOS may be a mixture of linear IOS molecules and branched IOS molecules.

An internal olefin or IOS may be characterised by its carbon number and/or linearity. In case reference is made to an average carbon number, this means that the internal olefin or IOS in question is a mixture of molecules which differ from each other in terms of carbon number.

Within the present specification, said average carbon number is determined by multiplying the number of carbon atoms of each molecule by the weight fraction of that molecule and then adding the products, resulting in a weight average carbon number. The average carbon number may be determined by gas chromatography (GC) analysis of the internal olefin.

Within the present specification, linearity is determined by dividing the weight of linear molecules by the total weight of branched, linear and cyclic molecules. Substituents (like the sulfonate group and optional hydroxy group in internal olefin sulfonates) on the carbon chain are not seen as branches. The linearity may be determined by gas chromatography (GC) analysis of the internal olefin.

In the present invention, the internal olefin sulfonate composition comprises a monosubstituted internal olefin sulfonate substituted by one sulfonate group and a disubstituted internal olefin sulfonate substituted by two sulfonate groups. Preferably, said IOS are linear. Preferably at least 60 wt.%, more preferably at least 70 wt.%, more preferably at least 80 wt.%, most preferably at least 90 wt.% of the alkanes are linear. For example, 60 to 100 wt.%, more suitably 70 to 99 wt.%, most suitably 80 to 99 wt.% of the IOS may be linear. Branches in said IOS may include methyl, ethyl and/or higher molecular weight branches including propyl branches.

Further, preferably, said IOS are not substituted by groups other than sulfonate groups and optionally hydroxy groups. Further, preferably, said IOS have an average carbon number in the range of from 5 to 30, more preferably 8 to 28, more preferably 10 to 27, more preferably 12 to 26, more preferably 13 to 25, more preferably 14 to 24, more preferably higher than 15 to 24, more preferably 16 to 24, more preferably 17 to 24, more preferably 18 to 24, more preferably 19 to 24, more preferably 19 to 23, more preferably 20 to 24, more preferably 20 to 23, most preferably 18 to 22.

Still further, preferably, said IOS may have a carbon number distribution within broad ranges. For example, in the present invention, said IOS may be selected from the group consisting of C₁₅₋₁₈ IOS, C₁₉₋₂₃ IOS, C₂₀₋₂₄ IOS and C₂₄₋₂₈ IOS, wherein "IOS" stands for "internal olefin sulfonate". IOS suitable for use in the present invention include those from the ENORDET™ O series of surfactants commercially available from Shell Chemicals Company.

"C₁₅₋₁₈ internal olefin sulfonate" (C₁₅₋₁₈ IOS) as used herein means a mixture of internal olefin sulfonate molecules wherein the mixture has an average carbon number of from 16 to 17 and at least 50% by weight, preferably at least 65% by weight, more preferably at least 75% by weight, most preferably at least 90% by weight, of the internal olefin sulfonate molecules in the mixture contain from 15 to 18 carbon atoms.

"C₁₉₋₂₃ internal olefin sulfonate" (C₁₉₋₂₃ IOS) as used herein means a mixture of internal olefin sulfonate molecules wherein the mixture has an average carbon number of from 21 to 23 and at least 50% by weight, preferably at least 60% by weight, of the internal olefin sulfonate molecules in the mixture contain from 19 to 23 carbon atoms.

"C₂₀₋₂₄ internal olefin sulfonate" (C₂₀₋₂₄ IOS) as used herein means a mixture of internal olefin sulfonate molecules wherein the mixture has an average carbon number of from 20 to 23 and at least 50% by weight, preferably at least 65% by weight, more preferably at least 75% by weight, most preferably at least 90% by weight, of the internal olefin sulfonate molecules in the mixture contain from 20 to 24 carbon atoms.

"C₂₄₋₂₈ internal olefin sulfonate" (C₂₄₋₂₈ IOS) as used herein means a mixture of internal olefin sulfonate molecules wherein the mixture has an average carbon number of from 24.5 to 27 and at least 40% by weight, preferably at least 45% by weight, of the internal olefin sulfonate molecules in the mixture contain from 24 to 28 carbon atoms.

Further, for the mono- and disubstituted internal olefin sulfonates which are substituted by sulfonate groups, the cation may be any cation, such as an ammonium, alkali metal or alkaline earth metal cation, preferably an ammonium or alkali metal cation.

An IOS molecule is made from an internal olefin molecule whose double bond is located anywhere along the carbon chain except at a terminal carbon atom. Internal olefin molecules may be made by double bond isomerization of alpha-olefin molecules whose double bond is located at a terminal position. Generally, such isomerization results in a mixture of internal olefin molecules whose double bonds are located at different internal positions. The distribution of the double bond positions is mostly thermodynamically determined. Further, that mixture may also comprise a minor amount of non-isomerized alpha-olefins. Still further, because the starting alpha-olefin may comprise a minor amount of paraffins (non-olefinic alkanes), the mixture resulting from alpha-olefin isomeration may likewise comprise that minor amount of unreacted paraffins.

In the present invention, the amount of alpha-olefins in the internal olefin may be up to 5%, for example 1 to 4 wt.% based on total composition. Further, in the present invention, the amount of paraffins in the internal olefin may be up to 2 wt.%, for example up to 1 wt.% based on total composition.

Suitable processes for making an internal olefin include those described in US5510306, US5633422, US5648584, US5648585, US5849960, EP0830315B1 and "Anionic Surfactants: Organic Chemistry", Surfactant Science Series, volume 56, Chapter 7, Marcel Dekker, Inc., New York, 1996, ed. H.W. Stacke.

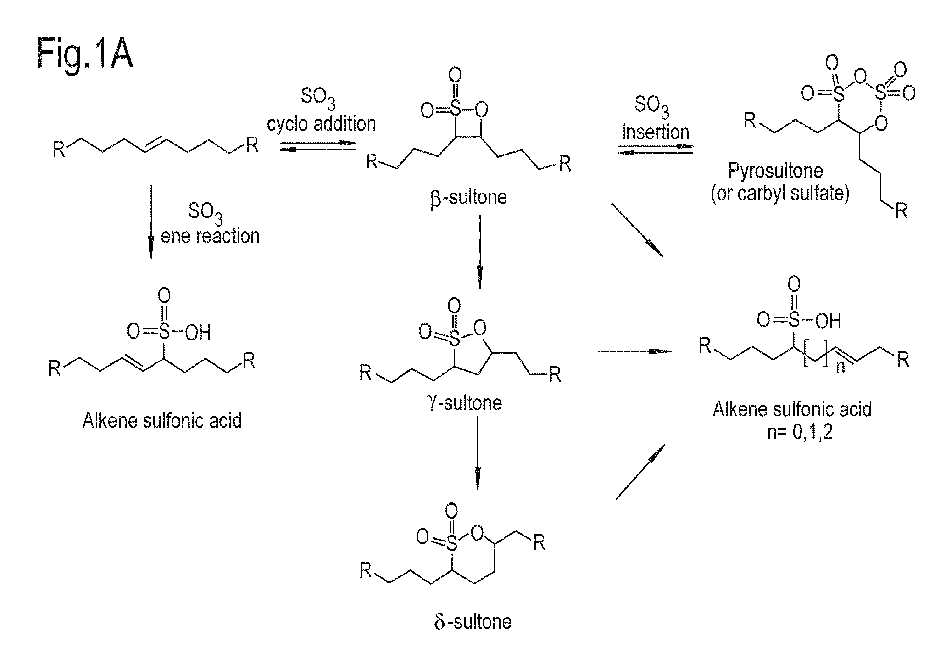

In the sulfonation step, the internal olefin is contacted with a sulfonating agent. Referring to Figure 1A, reaction of the sulfonating agent with an internal olefin leads to the formation of cyclic intermediates known as beta-sultones, which can undergo isomerization to unsaturated sulfonic acids and the more stable gamma- and delta-sultones.

In a next step, sulfonated internal olefin from the sulfonation step is contacted with a base containing solution. Referring to Figure 1B, in this step, beta-sultones are converted into beta-hydroxyalkane sulfonates, whereas gamma- and delta-sultones are converted into gamma-hydroxyalkane sulfonates and delta-hydroxyalkane sulfonates, respectively. Part of said hydroxyalkane sulfonates may be dehydrated into alkene sulfonates.

Thus, referring to Figures 1A and 1B, an IOS comprises a range of different molecules, which may differ from one another in terms of carbon number, being branched or unbranched, number of branches, molecular weight and number and distribution of functional groups such as sulfonate and hydroxyl groups. An IOS comprises both hydroxyalkane sulfonate molecules and alkene sulfonate molecules and possibly also di-sulfonate molecules. Hydroxyalkane sulfonate molecules and alkene sulfonate molecules are shown in Figure 1B. Di-sulfonate molecules (not shown in Figure 1B) originate from a further sulfonation of for example an alkene sulfonic acid as shown in Figure 1A.

The IOS may comprise at least 30% hydroxyalkane sulfonate molecules, up to 70% alkene sulfonate molecules and up to 10% di-sulfonate molecules. Suitably, the IOS comprises from 40% to 95% hydroxyalkane sulfonate molecules, from 5% to 50% alkene sulfonate molecules and from 0% to 10% di-sulfonate molecules. Beneficially, the IOS comprises from 50% to 90% hydroxyalkane sulfonate molecules, from 10% to 40% alkene sulfonate molecules and from less than 1% to 5% di-sulfonate molecules. More beneficially, the IOS comprises from 70% to 90% hydroxyalkane sulfonate molecules, from 10% to 30% alkene sulfonate molecules and less than 1% di-sulfonate molecules. The composition of the IOS may be measured using a liquid chromatography / mass spectrometry (LC-MS) technique.

US4183867, US4248793 and EP0351928A1, the disclosures of all of which are incorporated herein by reference, disclose processes which can be used to make internal olefin sulfonates in the process of the present invention. Further, the internal olefin sulfonates may be synthesized in a way as described by Van Os et al. in "Anionic Surfactants: Organic Chemistry", Surfactant Science Series 56, ed. Stacke H.W., 1996, Chapter 7: Olefin sulfonates, pages 367-371, the disclosure of which is incorporated herein by reference.

The internal olefin sulfonate composition of the present invention may comprise one or more other surfactants that are suitable for use in methods of chemical Enhanced Oil Recovery (cEOR), such as for example secondary alkane sulfonates (SIOS), alkoxylated alcohol sulfates, carboxylates and glycerol sulfonates, linear alkyl benzene sulfonates (LABS), and heavy alkyl benzene sulfonates (HABS). Furthermore, internal olefin sulfonates, for which the molar ratio of the monosubstituted internal olefin sulfonate to the disubstituted internal olefin sulfonate is lower than 70:1, may also be added to the internal olefin sulfonate composition of the present invention.

In the present invention, a cosolvent (or solubilizer) may be added to increase the solubility of the surfactant in the internal olefin sulfonate composition of the present invention and/or in the below-mentioned injectable fluid comprising said composition. Suitable examples of cosolvents are polar cosolvents, including lower alcohols (for example sec-butanol and isopropyl alcohol) and polyethylene glycol. Any amount of cosolvent needed to dissolve all of the surfactant at a certain salt concentration (salinity) may be easily determined by a skilled person through routine tests.

Still further, the internal olefin sulfonate composition of the present invention may comprise a base (herein also referred to as "alkali"), preferably an aqueous soluble base, including alkali metal containing bases such as for example sodium carbonate and sodium hydroxide.

In another aspect, the present invention relates to a process for providing the above-described composition. More in particular, the present invention further relates to a process for treatment of an internal olefin sulfonate composition, which composition comprises a monosubstituted internal olefin sulfonate substituted by one sulfonate group and a disubstituted internal olefin sulfonate substituted by two sulfonate groups, in which process substantially all of the disubstituted internal olefin sulfonate is removed or the disubstituted internal olefin sulfonate is removed to such extent that the molar ratio of the monosubstituted internal olefin sulfonate to the disubstituted internal olefin sulfonate is increased to a value which is equal to or higher than 70:1 and is preferably in the range of from 70:1 to 10,000:1. Within the present specification, removal of "substantially all" of the disubstituted internal olefin sulfonate means that no detectible amount of the disubstituted internal olefin sulfonate remains behind in the composition.

However, it is also envisaged that the method for preparing internal olefin sulfonates in question may be performed in such way that the product obtained in such preparation method comprises substantially less disubstituted internal olefin sulfonate. This may be achieved by maintaining the degree of conversion (per pass) at a low level, for example by a relatively short residence time. In case substantially less disubstituted internal olefin sulfonate is produced as described above, there would be no need, after carrying out the preparation method, to remove disubstituted internal olefin sulfonate in accordance with the above-mentioned treatment process.

The present process for treatment of an internal olefin sulfonate composition, wherein substantially all of the disubstituted internal olefin sulfonate is removed or the disubstituted internal olefin sulfonate is removed to such extent that the molar ratio of the monosubstituted internal olefin sulfonate to the disubstituted internal olefin sulfonate is increased to a value which is equal to or higher than 70:1 and is preferably in the range of from 70:1 to 10,000:1, may also result in that the molar ratio of hydroxy alkane sulfonates (HAS) to alkene sulfonates (molar HAS:OS ratio) is changed, namely increased, suitably increased by 1-20%, more suitably 2-15%, especially in a case where extraction, one or multiple times, is selected to perform said treatment process.

In the above-mentioned treatment process, wherein substantially all or part of the disubstituted internal olefin sulfonate is removed, such removal may be performed by any suitable separation method known to the skilled person, for example by extraction, recrystallisation, adsorption, absorption or (high pressure) liquid chromotagraphy (HPLC).

For example, in a case where removal of the disubstituted internal olefin sulfonate is performed by means of extraction, such treatment may comprise subjecting the internal olefin sulfonate composition to an extraction using at least two solvents, wherein the polarity of one solvent is higher than the polarity of the other solvent(s), resulting in at least two phases one of which is more polar than the other phase(s). In this illustrative embodiment, the solvent having a relatively high polarity may for example be water, methanol, brine or dimethyl sulfoxide (DMSO). Brine is an aqueous solution containing monovalent salt, such as for example sodium chloride. Further, in that embodiment, the solvent having a relatively low polarity may for example be a lower alkanol having of from 3 to 10 carbon atoms, such as 2-butanol, or an aromatic solvent, such as toluene.

In yet another aspect, the present invention relates to a method of treating a hydrocarbon containing formation, comprising the following steps:
a) providing the composition as described above or the composition as obtained by the treatment process as described above, that is to say an internal olefin sulfonate composition which comprises a monosubstituted internal olefin sulfonate substituted by one sulfonate group and optionally a disubstituted internal olefin sulfonate substituted by two sulfonate groups, wherein if the composition comprises said disubstituted internal olefin sulfonate the molar ratio of the monosubstituted internal olefin sulfonate to the disubstituted internal olefin sulfonate is equal to or higher than 70:1 and is preferably in the range of from 70:1 to 10,000:1, to at least a portion of the hydrocarbon containing formation; and
b) allowing the internal olefin sulfonate from the composition to interact with the hydrocarbons in the hydrocarbon containing formation.

In the above-mentioned method of treating a hydrocarbon containing formation, the internal olefin sulfonate (hereinafter also "IOS") is applied in cEOR (chemical Enhanced Oil Recovery) at the location of the hydrocarbon containing formation, more in particular by providing the above-described IOS composition to at least a portion of the hydrocarbon containing formation and then allowing the IOS from said composition to interact with the hydrocarbons in the hydrocarbon containing formation. Said hydrocarbon containing formation may be a crude oil-bearing formation.

Normally, surfactants for enhanced hydrocarbon recovery are transported to a hydrocarbon recovery location and stored at that location in the form of an aqueous solution containing for example 30 to 35 wt.% of the surfactant. At the hydrocarbon recovery location, such solution would then be further diluted to a 0.05-2 wt.% solution, before it is injected into a hydrocarbon containing formation. By such dilution, an aqueous fluid is formed which fluid can be injected into the hydrocarbon containing formation, that is to say an injectable fluid. The water used in such dilution may originate from the formation from which hydrocarbons are to be recovered, which formation water may have to be pretreated, for example by removing divalent ions. Preferably, said water is brine, which is a monovalent salt (for example NaCl) containing aqueous solution.

The amount of IOS surfactant, or the total amount of surfactants in case one or more other surfactants are used, in said injectable fluid, may be of from 0.05 to 2 wt.%, preferably 0.1 to 1.5 wt.%, more preferably 0.1 to 1.0 wt.%, most preferably 0.2 to 0.5 wt.%.

In the present invention, the temperature within the hydrocarbon containing formation may be between 10°C and 150°C, optionally between 30°C and 90°C. Further, in the present invention, the salinity of the water originating from the hydrocarbon containing formation may be between 0.5% and 20% or between 0.5% and 10% or between 1% and 6%.

Hydrocarbons may be produced from hydrocarbon containing formations through wells penetrating such formations. "Hydrocarbons" are generally defined as molecules formed primarily of carbon and hydrogen atoms such as oil and natural gas. Hydrocarbons may also include other elements, such as halogens, metallic elements, nitrogen, oxygen and/or sulfur. Hydrocarbons derived from a hydrocarbon containing formation may include kerogen, bitumen, pyrobitumen, asphaltenes, oils or combinations thereof. Hydrocarbons may be located within or adjacent to mineral matrices within the earth. Matrices may include sedimentary rock, sands, silicilytes, carbonates, diatomites and other porous media.

A "hydrocarbon containing formation" may include one or more hydrocarbon containing layers, one or more non-hydrocarbon containing layers, an overburden and/or an underburden. An overburden and/or an underburden includes one or more different types of impermeable materials. For example, overburden/underburden may include rock, shale, mudstone, or wet/tight carbonate (that is to say an impermeable carbonate without hydrocarbons). For example, an underburden may contain shale or mudstone. In some cases, the overburden/underburden may be somewhat permeable. For example, an underburden may be composed of a permeable mineral such as sandstone or limestone.

Properties of a hydrocarbon containing formation may affect how hydrocarbons flow through an underburden/overburden to one or more production wells. Properties include porosity, permeability, pore size distribution, surface area, salinity or temperature of formation. Overburden/underburden properties in combination with hydrocarbon properties, capillary pressure (static) characteristics and relative permeability (flow) characteristics may affect mobilisation of hydrocarbons through the hydrocarbon containing formation.

Fluids (for example gas, water, hydrocarbons or combinations thereof) of different densities may exist in a hydrocarbon containing formation. A mixture of fluids in the hydrocarbon containing formation may form layers between an underburden and an overburden according to fluid density. Gas may form a top layer, hydrocarbons may form a middle layer and water may form a bottom layer in the hydrocarbon containing formation. The fluids may be present in the hydrocarbon containing formation in various amounts. Interactions between the fluids in the formation may create interfaces or boundaries between the fluids. Interfaces or boundaries between the fluids and the formation may be created through interactions between the fluids and the formation. Typically, gases do not form boundaries with other fluids in a hydrocarbon containing formation. A first boundary may form between a water layer and underburden. A second boundary may form between a water layer and a hydrocarbon layer. A third boundary may form between hydrocarbons of different densities in a hydrocarbon containing formation.

Production of fluids may perturb the interaction between fluids and between fluids and the overburden/underburden. As fluids are removed from the hydrocarbon containing formation, the different fluid layers may mix and form mixed fluid layers. The mixed fluids may have different interactions at the fluid boundaries. Depending on the interactions at the boundaries of the mixed fluids, production of hydrocarbons may become difficult.

Quantification of energy required for interactions (for example mixing) between fluids within a formation at an interface may be difficult to measure. Quantification of energy levels at an interface between fluids may be determined by generally known techniques (for example spinning drop tensiometer). Interaction energy requirements at an interface may be referred to as interfacial tension. "Interfacial tension" as used herein, refers to a surface free energy that exists between two or more fluids that exhibit a boundary. A high interfacial tension value (for example greater than 10 dynes/cm) may indicate the inability of one fluid to mix with a second fluid to form a fluid emulsion. As used herein, an "emulsion" refers to a dispersion of one immiscible fluid into a second fluid by addition of a compound that reduces the interfacial tension between the fluids to achieve stability. The inability of the fluids to mix may be due to high surface interaction energy between the two fluids. Low interfacial tension values (for example less than 1 dyne/cm) may indicate less surface interaction between the two immiscible fluids. Less surface interaction energy between two immiscible fluids may result in the mixing of the two fluids to form an emulsion. Fluids with low interfacial tension values may be mobilised to a well bore due to reduced capillary forces and subsequently produced from a hydrocarbon containing formation. Thus, in surfactant cEOR, the mobilisation of residual oil is achieved through surfactants which generate a sufficiently low crude oil / water interfacial tension (IFT) to give a capillary number large enough to overcome capillary forces and allow the oil to flow.

Mobilisation of residual hydrocarbons retained in a hydrocarbon containing formation may be difficult due to viscosity of the hydrocarbons and capillary effects of fluids in pores of the hydrocarbon containing formation. As used herein "capillary forces" refers to attractive forces between fluids and at least a portion of the hydrocarbon containing formation. Capillary forces may be overcome by increasing the pressures within a hydrocarbon containing formation. Capillary forces may also be overcome by reducing the interfacial tension between fluids in a hydrocarbon containing formation. The ability to reduce the capillary forces in a hydrocarbon containing formation may depend on a number of factors, including the temperature of the hydrocarbon containing formation, the salinity of water in the hydrocarbon containing formation, and the composition of the hydrocarbons in the hydrocarbon containing formation.

As production rates decrease, additional methods may be employed to make a hydrocarbon containing formation more economically viable. Methods may include adding sources of water (for example brine, steam), gases, polymers or any combinations thereof to the hydrocarbon containing formation to increase mobilisation of hydrocarbons.

In the present invention, the hydrocarbon containing formation is thus treated with the diluted or not-diluted IOS surfactant containing solution, as described above. Interaction of said solution with the hydrocarbons may reduce the interfacial tension of the hydrocarbons with one or more fluids in the hydrocarbon containing formation. The interfacial tension between the hydrocarbons and an overburden/underburden of a hydrocarbon containing formation may be reduced. Reduction of the interfacial tension may allow at least a portion of the hydrocarbons to mobilise through the hydrocarbon containing formation.

The ability of the IOS surfactant containing solution to reduce the interfacial tension of a mixture of hydrocarbons and fluids may be evaluated using known techniques. The interfacial tension value for a mixture of hydrocarbons and water may be determined using a spinning drop tensiometer. An amount of the IOS surfactant containing solution may be added to the hydrocarbon/water mixture and the interfacial tension value for the resulting fluid may be determined.

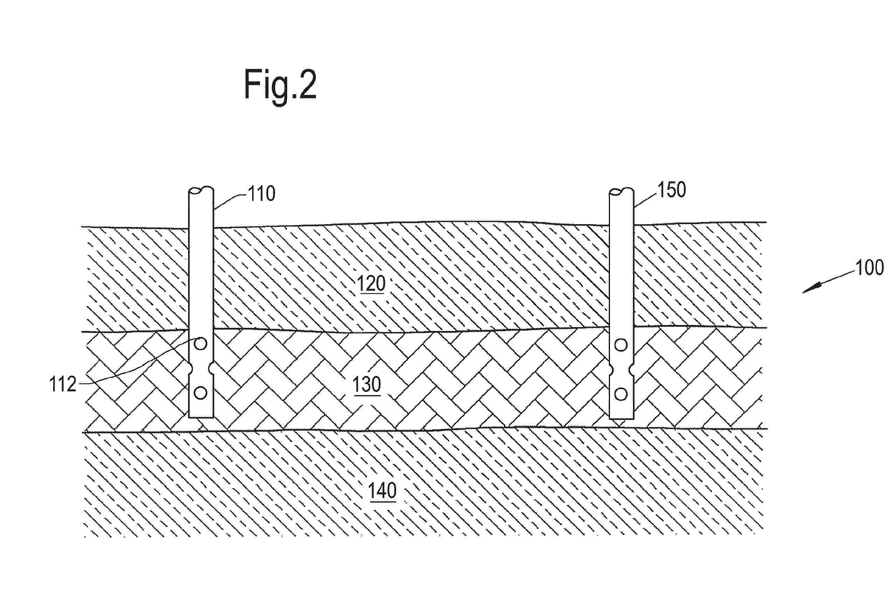

The IOS surfactant containing solution, diluted or not diluted, may be provided (for example injected in the form of a diluted aqueous fluid) into hydrocarbon containing formation 100 through injection well 110 as depicted in Figure 2. Hydrocarbon containing formation 100 may include overburden 120, hydrocarbon layer 130 (the actual hydrocarbon containing formation), and underburden 140. Injection well 110 may include openings 112 (in a steel casing) that allow fluids to flow through hydrocarbon containing formation 100 at various depth levels. Low salinity water may be present in hydrocarbon containing formation 100.

The surfactant from the IOS surfactant containing solution may interact with at least a portion of the hydrocarbons in hydrocarbon layer 130. This interaction may reduce at least a portion of the interfacial tension between one or more fluids (for example water, hydrocarbons) in the formation and the underburden 140, one or more fluids in the formation and the overburden 120 or combinations thereof.

The surfactant from the IOS surfactant containing solution may interact with at least a portion of hydrocarbons and at least a portion of one or more other fluids in the formation to reduce at least a portion of the interfacial tension between the hydrocarbons and one or more fluids. Reduction of the interfacial tension may allow at least a portion of the hydrocarbons to form an emulsion with at least a portion of one or more fluids in the formation. The interfacial tension value between the hydrocarbons and one or more other fluids may be altered by the IOS surfactant containing solution to a value of less than 0.1 dyne/cm or less than 0.05 dyne/cm or less than 0.001 dyne/cm.

At least a portion of the IOS surfactant containing solution/hydrocarbon/fluids mixture may be mobilised to production well 150. Products obtained from the production well 150 may include components of the IOS surfactant containing solution, methane, carbon dioxide, hydrogen sulfide, water, hydrocarbons, ammonia, asphaltenes or combinations thereof. Hydrocarbon production from hydrocarbon containing formation 100 may be increased by greater than 50% after the IOS surfactant containing solution has been added to a hydrocarbon containing formation.

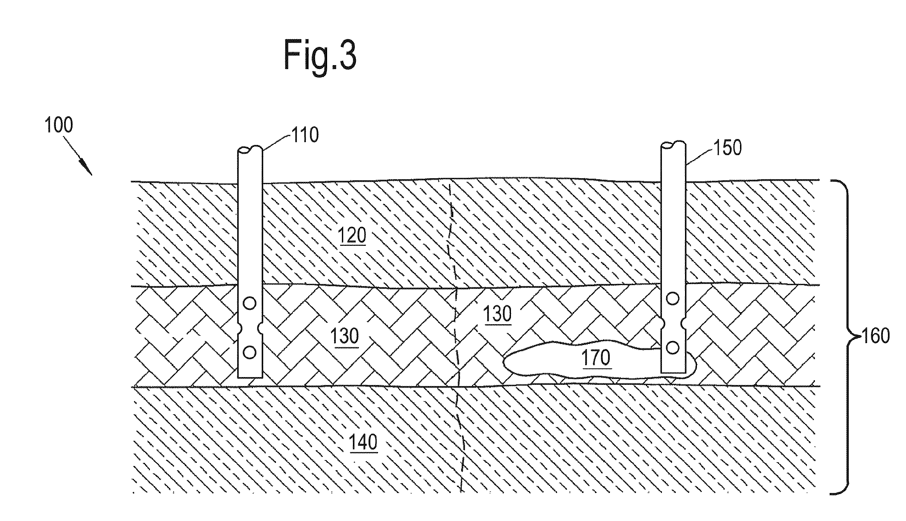

The IOS surfactant containing solution, diluted or not diluted, may also be injected into hydrocarbon containing formation 100 through injection well 110 as depicted in Figure 3. Interaction of the surfactant from the IOS surfactant containing solution with hydrocarbons in the formation may reduce at least a portion of the interfacial tension between the hydrocarbons and underburden 140. Reduction of at least a portion of the interfacial tension may mobilise at least a portion of hydrocarbons to a selected section 160 in hydrocarbon containing formation 100 to form hydrocarbon pool 170. At least a portion of the hydrocarbons may be produced from hydrocarbon pool 170 in the selected section of hydrocarbon containing formation 100.

It may be beneficial under certain circumstances that an aqueous fluid, wherein the IOS surfactant containing solution is diluted, contains inorganic salt, such as sodium chloride, sodium hydroxide, potassium chloride, ammonium chloride, sodium sulfate or sodium carbonate. Such inorganic salt may be added separately from the IOS surfactant containing solution or it may be included in the IOS surfactant containing solution before it is diluted in water. The addition of the inorganic salt may help the fluid disperse throughout a hydrocarbon/water mixture and to reduce surfactant loss by adsorption onto rock. This enhanced dispersion may decrease the interactions between the hydrocarbon and water interface. The decreased interaction may lower the interfacial tension of the mixture and provide a fluid that is more mobile.

## Claims

1. Internal olefin sulfonate composition, which composition comprises a monosubstituted internal olefin sulfonate substituted by one sulfonate group and optionally a disubstituted internal olefin sulfonate substituted by two sulfonate groups, wherein if the composition comprises said disubstituted internal olefin sulfonate the molar ratio of the monosubstituted internal olefin sulfonate to the disubstituted internal olefin sulfonate is equal to or higher than 70:1 and is preferably in the range of from 70:1 to 10,000:1.

2. Internal olefin sulfonate composition according to claim 1, wherein the molar ratio of the monosubstituted internal olefin sulfonate to the disubstituted internal olefin sulfonate is in the range of from 90:1 to 7,000:1, preferably 120:1 to 5,000:1, more preferably 160:1 to 3,000:1.

3. Internal olefin sulfonate composition according to claim 1 or 2, wherein the internal olefin sulfonate has an average carbon number in the range of from 5 to 30.

4. Internal olefin sulfonate composition according to any one of the preceding claims, wherein the internal olefin sulfonate is selected from the group consisting of C₁₅₋₁₈ IOS, C₁₉₋₂₃ IOS, C₂₀₋₂₄ IOS and C₂₄₋₂₈ IOS, wherein "IOS" stands for "internal olefin sulfonate".

5. Internal olefin sulfonate composition according to any one of the preceding claims, which composition further comprises one or more surfactants selected from the group consisting of secondary alkane sulfonates (SAS), alkoxylated alcohol sulfates, carboxylates and glycerol sulfonates, linear alkyl benzene sulfonates (LABS), and heavy alkyl benzene sulfonates (HABS).

6. Process for treatment of an internal olefin sulfonate composition, which composition comprises a monosubstituted internal olefin sulfonate substituted by one sulfonate group and a disubstituted internal olefin sulfonate substituted by two sulfonate groups, in which process substantially all of the disubstituted internal olefin sulfonate is removed or the disubstituted internal olefin sulfonate is removed to such extent that the molar ratio of the monosubstituted internal olefin sulfonate to the disubstituted internal olefin sulfonate is increased to a value which is equal to or higher than 70:1 and is preferably in the range of from 70:1 to 10,000:1.

7. A method of treating a hydrocarbon containing formation, comprising the following steps:
a) providing an internal olefin sulfonate composition, which composition comprises a monosubstituted internal olefin sulfonate substituted by one sulfonate group and optionally a disubstituted internal olefin sulfonate substituted by two sulfonate groups, wherein if the composition comprises said disubstituted internal olefin sulfonate the molar ratio of the monosubstituted internal olefin sulfonate to the disubstituted internal olefin sulfonate is equal to or higher than 70:1 and is preferably in the range of from 70:1 to 10,000:1, or the composition as obtained by the process of claim 7, to at least a portion of the hydrocarbon containing formation; and
b) allowing the internal olefin sulfonate from the composition to interact with the hydrocarbons in the hydrocarbon containing formation.

8. Method according to claim 7, wherein the molar ratio of the monosubstituted internal olefin sulfonate to the disubstituted internal olefin sulfonate is in the range of from 90:1 to 7,000:1, preferably 120:1 to 5,000:1, more preferably 160:1 to 3,000:1.

9. Method according to claim 7 or 8, wherein the internal olefin sulfonate has an average carbon number in the range of from 5 to 30.

10. Method according to any one of claims 7-9, wherein the internal olefin sulfonate is selected from the group consisting of C₁₅₋₁₈ IOS, C₁₉₋₂₃ IOS, C₂₀₋₂₄ IOS and C₂₄₋₂₈ IOS, wherein "IOS" stands for "internal olefin sulfonate".

11. Method according to any one of claims 7-10, which composition further comprises one or more surfactants selected from the group consisting of secondary alkane sulfonates (SAS), alkoxylated alcohol sulfates, carboxylates and glycerol sulfonates, linear alkyl benzene sulfonates (LABS), and heavy alkyl benzene sulfonates (HABS).
